# EUROPÄISCHE PATENTANMELDUNG

(11) **EP 4 838 199 A1**
(43) Veröffentlichungstag der Anmeldung: **11.11.2026**
(21) Anmeldenummer: 26174996.4
(22) Anmeldetag: 28.04.2026
(51) Int. Cl.: G01N 11/00, G01N 11/14

(54) **ROTATIONS-RHEOMETER ZUR SEQUENZIELLEN ANALYSE VON EINZELPROBEN UND VERFAHREN ZUR SEQUENZIELLEN ANALYSE VON EINZELPROBEN IN EINEM ROTATIONS-RHEOMETER**

(30) Priorität: 06.05.2025 DE 102025117325
(71) Anmelder: Netzsch-Gerätebau GmbH, 95100 Selb (DE)
(72) Erfinder: Küspert, Dr., Sabrina, 95100 Selb (DE); Rummel, Florian, 95100 Selb (DE); Szàntò, Levente, 95028 Hof (DE); Taubmann, Dr., Rebekka, 95100 Selb (DE); Dunkel, Johannes, 95111 Rehau (DE)

(57) **Zusammenfassung**

Die vorliegende Erfindung schafft ein Rotations-Rheometer zur sequenziellen Analyse von Einzelproben in Probegefäßen wenigstens eines, jeweils mehrere Probengefäße aufweisenden Probenträgers, umfassend wenigstens eine Messeinheit mit einem an einer drehbaren Messwelle anordenbaren und zur Ausbildung eines Messspaltes im Bereich eines Gefäßbodens des Probengefäßes in das jeweilige Probengefäß einsenkbaren Messkopf; und eine relativ zu der Messeinheit beabstandete Auflagefläche für den Probenträger, wobei wenigstens eine Positioniereinrichtung zur fluchtenden Ausrichtung des Messkopfes und des jeweiligen Probengefäßes vor der Analyse der Einzelprobe vorgesehen ist, ein Verfahren zur sequenziellen Analyse von Einzelproben in einem Rotations-Rheometer, sowie einen Probenträger zur Verwendung in einem Rotations-Rheometer.

## Beschreibung

Die vorliegende Erfindung betrifft ein Rotations-Rheometer zur sequenziellen Analyse von Einzelproben, ein Verfahren zur sequenziellen Analyse von Einzelproben in einem solchen Rotations-Rheometer sowie einen Probenträger.

Rotations-Rheometer dienen der Bestimmung der rheologischen Eigenschaften von Materialproben und hierbei insbesondere zur Messung des Fließ- und Deformationsverhaltens unter kontrollierten Scher- oder Deformationsbedingungen. Typischerweise umfasst ein Rotations-Rheometer eine rotierende Einheit, die über ein Motorantriebssystem präzise Bewegungen in einem Messsystems ausführt, das geometrische Elemente aufweist, die es ermöglichen, Schub- und Zugspannungen auf das Material auszuüben sowie vertikale Antriebe zur Einstellung der Weite eines Messpaltes oder zur Durchführung rheologischer Messungen beispielsweise im Rahmen von squeeze flow und tack test Anwendungen. Während der rheologischen Analyse werden kontrollierte Scher- oder Deformationskräfte erzeugt, um die Fließ- und Verformungseigenschaften des Probenmaterials zu untersuchen. Durch das Anlegen eines Drehmoments und die Messung des daraus resultierenden Fließverhaltens kann die Viskosität und das elastische Verhalten des Probenmaterials bestimmt werden. Rotations-Rheometer erlauben die Analyse von Viskositätskurven, Scherspannungen und Moduli von Materialien unter verschiedenen Bedingungen, wie z.B. Temperatur, Schergeschwindigkeit und mechanischen Belastungen, insbesondere Deformation. Rotations-Rheometer werden beispielsweise zur Analyse von Polymeren verwendet, um die Verarbeitbarkeit und das Fließverhalten von Schmelzen und Lösungen zu analysieren. In der Lebensmitteltechnologie können auf Basis der rotationsrheometrischen Analyseergebnisse Konsistenz und Textur von Produkten beurteilt werden, während in der Kosmetik- und Pharmabranche u.a. die Stabilität und das Verformungsverhalten von Cremes und Salben analysiert werden können. In herkömmlichen Rotations-Rheometern erfolgt in der Regel eine einzelprobenweise Messung, wobei nach der Durchführung einer Analyse eine Entnahme der gemessene Probe und die Neubestückung des Rheometers mit der nachfolgend zu messenden Probe händisch durchgeführt wird. Dies erweist sich als zeit- und arbeitsintensiv, sowohl in der Analysevor- wie auch -nachbereitung und limitiert den Probendurchsatz pro Zeiteinheit. Zudem werden für herkömmliche rotationsrheometrische Analysen große Probenvolumina benötigt. Beides erweist sich insbesondere in der biomedizinischen Forschung und Entwicklung von Pharmazeutika als nachteilig, da hierbei im Interesse der Reproduzierbarkeit der Messungen und eines hohen Probendurchsatzes in der Regel kleine Probenvolumina möglichst simultan charakterisiert werden sollen.

Es ist daher Aufgabe der vorliegenden Erfindung, Möglichkeiten zur Durchführung von rheologischen Analysen mit hohem Probendurchsatz und/oder in geringen Probenvolumina zu schaffen.

Erfindungsgemäß wird diese Aufgabe jeweils durch die Gegenstände der unabhängigen Ansprüche gelöst.

Gemäß einem ersten Aspekt der Erfindung ist ein Rotations-Rheometer zur sequenziellen Analyse von Einzelproben in Probegefäßen wenigstens eines, jeweils mehrere Probengefäße aufweisenden Probenträgers vorgesehen, wobei das Rotations-Rheometer wenigstens eine Messeinheit mit einem an einer drehbaren Messwelle anordenbaren, und zur Ausbildung eines Messspaltes im Bereich eines Gefäßbodens des Probengefäßes in das jeweilige Probengefäß einsenkbaren Messkopf und eine relativ zu dem Messkopf beabstandete Auflagefläche für den Probenträger umfasst, wobei wenigstens eine Positioniereinrichtung zur fluchtenden Ausrichtung des Messkopfes und des jeweiligen Probengefäßes vor der Analyse der Einzelprobe vorgesehen ist.

Gemäß einem zweiten Aspekt der Erfindung ist ein Verfahren zur sequenziellen Analyse von Einzelproben in einem Rotations-Rheometer, insbesondere in einem erfindungsgemäßen Rotations-Rheometer, vorgesehen, das die Schritte: Anordnen eines oder mehrerer Probengefäße, beispielsweise Mikrotiterplatten mit Standardformaten wie herkömmliche sog. 96er well plates, mit in den Probengefäßen vorgelegten Einzelproben aufweisenden Probenträgers auf oder in einer Auflagefläche, fluchtendes Ausrichten des Messkopfes relativ zu einem ersten der jeweiligen Probengefäße durch die Positioniereinrichtung, Einsenken des Messkopfes in das Probengefäß zur Ausbildung eines Messspaltes zwischen dem Messkopf und einem Gefäßboden des Probengefäßes, Durchführen der rheologischen Messung und Analyse im jeweiligen Probengefäß und Erfassung von rheologischen Analysedaten jeder Einzelprobe durch die Sensoranordnung, Ausheben des Messkopfes aus dem Probengefäß nach Abschluss der Analyse, Reinigen oder, insbesondere bei kritischen Proben, Austausch des Messkopfes oder von die Probe kontaktierenden Elementen des Messkopfes, und Wiederholung der vorhergehenden Schritte bis zum Abschluss der Analyse aller Einzelproben des Probenträgers, umfasst.

Gemäß einem dritten Aspekt der Erfindung ist ein Probenträger, insbesondere zur Verwendung in einem erfindungsgemäßen Rotations-Rheometer, vorgesehen, der eine Vielzahl von in einem definierten Raster angeordneten Probengefäßen für jeweils eine Einzelprobe aufweist.

Gemäß einem vierten Aspekt der Erfindung ist eine Verwendung eines Probenträgers zur sequenziellen rheologischen Analyse von Einzelproben in einem Rotations-Rheometer, insbesondere in einem erfindungsgemäßen Rotations-Rheometer, vorgesehen.

Eine der vorliegenden Erfindung zugrunde liegende Idee besteht darin, die Messung einer oder mehrerer rheologischer Größen, wie beispielsweise (Scher-) Viskosität, Dehnviskosität, Schubspannung, viskoelastische Eigenschaften, Speichermodul und/oder Verlustmodul für eine Vielzahl von Proben in einem Analysedurchgang durchzuführen. Hierzu werden mehrere Einzelproben in einem Probenträger zur Verfügung gestellt und jede Einzelprobe durch den Messkörper in eine horizontale und/oder vertikale Oszillation/Schwingung und/oder in Rotation versetzt. Vorteilhaft erlaubt die Erfindung die Durchführung sequenzieller Messungen einer Vielzahl von Proben in einem Messdurchgang, insbesondere auch mit sich überlagernden Bewegungen, ohne das manuelle, den Messdurchgang unterbrechende Zwischenschritte für die Neu-Bestückung des Messgeräts nach Entnahme der analysierten Einzelprobe erforderlich sind. Um insbesondere den Anforderungen der zum Beispiel biomedizinischen Forschung und Entwicklung von Pharmazeutika zu entsprechen, kann vorteilhaft eine Vielzahl Proben in einem Probenträger in kurzer Zeit und unter im Wesentlichen gleichen Bedingungen in der Messumgebung analysiert und rheologisch charakterisiert werden. In erfindungsgemäßen Geräten mit einer einzelnen Messeinheit werden die Einzelproben nacheinander automatisch analysiert, wobei jeweils eine Ausrichtung der Messeinheit relativ zur Einzelprobe bzw. dem diese beinhaltenden Probengefäß erfolgt, bevor die jeweilige Messung nach Einsenken des Messkopfes in die Probe durchgeführt wird. Die Messeinheit stellt dabei die rotierende Einheit zur Verfügung, wobei der in das Probengefäß eingesenkte Messkopf Schub- und Zugspannungen auf die Einzelprobe innerhalb des jeweiligen Probengefäßes ausübt. Die Einsenktiefe wird dabei anhand des jeweiligen Probengefäßes definiert, sodass sichergestellt ist, dass sich zwischen dem Messkopf und dem Boden des Probengefäßes ein Messspalt ausbildet, in dem die Fließ- und Verformungseigenschaften des Probenmaterials untersucht werden. Um zwei oder mehr Einzelproben simultan zu messen, kann das erfindungsgemäße Rotations-Rheometer mit zwei oder mehr gleichartig ausgebildeten Messeinheiten ausgestattet werden, deren Messköpfe zur Messung simultan in entsprechend beanstandete Probengefäße eingesenkt werden. Über die Positioniereinrichtung erfolgt dabei die relative Ausrichtung von Probengefäßen und Messeinheiten zueinander. Neben stationären Ausführungsformen ist auch ein portabler Aufbau, zum Beispiel mit Druckgasflaschen zur Versorgung eines Luftlagers der Messeinheit und Photovoltaikzellen zur Stromversorgung möglich, wobei sich das erfindungsgemäße Rotations-Rheometer in der mobilen Ausgestaltung auch für die Verwendung in Gebieten oder Umgebungen ohne ausreichende Infrastruktur eignet.

Vorteilhafte Ausführungsformen und Weiterbildungen ergeben sich aus den auf die unabhängigen Ansprüche rückbezogenen Unteransprüchen sowie aus der Beschreibung unter Bezugnahme auf die Figuren.

Gemäß einer Ausführungsform des Rotations-Rheometers ist wenigstens eine Positioniereinrichtung in der Auflagefläche vorgesehen, wobei die Positioniereinrichtung zur Positionierung des Probenträgers in horizontaler und vertikaler Richtung relativ zum Messkopf eingerichtet ist. Vorteilhaft besteht hierdurch die Möglichkeit die Auflagefläche und den dort positionierten Probenträger sowohl in horizontaler (x- und y-) als auch in vertikaler Richtung (z-) relativ zum Messkopf zu verfahren und auszurichten. Dadurch wird eine präzise Ausrichtung der Probe bzw. des Probengefäßes zur Messeinheit in allen Raumrichtungen ermöglicht. Die Ausrichtung kann dabei automatisch und in Abhängigkeit von dem jeweiligen Messprogramm vorgenommen werden. Selbstverständlich besteht auch die Möglichkeit einer manuellen Ausrichtung über entsprechende Steuerelemente beispielsweise in einer Gerätesteuerungssoftware. Die Geometrien einer Vielzahl von Probenträgern können hierzu auswählbar in der Steuersoftware hinterlegt werden. Die Anordnung und Belegung der Probengefäße kann über die Messsoftware oder durch entsprechend an der Messeinheit vorgesehene Sensoren erfasst werden.

Gemäß einer Weiterbildung ist in dem erfindungsgemäßen Rotations-Rheometer wenigstens eine der Messeinheit zugeordnete Positioniereinrichtung für eine Positionierung des Messkopfes, wenigstens in horizontaler und vertikaler Richtung relativ zum Probenträger vorgesehen. Vorteilhaft ermöglicht dies die Positionierung der Messeinheit - und damit des Messkopfes - in horizontaler (x- und y-) sowie vertikaler Richtung (z-) relativ zu einem in einer festen Position angeordneten Probenträger. Statt des Probenträgers wird in dieser Ausführungsform somit nur die Messeinheit bewegt und relativ zum feststehenden Probenträger bzw. den dort vorgesehene Probengefäßen ausgerichtet. Eine Positioniervorrichtung in oder an der Auflagefläche kann daher entfallen. Ein weiterer Vorteil dieser Ausführungsform liegt in der Möglichkeit, die Messeinheit durch die entsprechend ausgestaltete Positioniereinrichtung optional zu verschwenken oder zu verkippen, sodass der Messkopf in der Lage ist, Scherungen in sämtlichen Raumrichtungen innerhalb des Probengefäßes auszuführen. Dies erlaubt eine umfassende Analyse des rheologischen Verhaltens der Probe und ermöglicht die Erfassung komplexer Verformungseigenschaften.

Selbstverständlich ist auch ein Kombination der beiden vorher beschriebenen Ausführungsformen möglich, wobei sowohl die Messeinheit wie auch die Auflagefläche jeweils mit einer Positioniereinrichtung ausgestattet ist, sodass eine Relativbewegung in sämtlichen Raumrichtungen möglich wird. Bevorzugt ist die Steuerung der beiden Positioniereinrichtungen dabei entsprechend verknüpft.

Gemäß einer Weiterbildung weist die Messeinheit eine Sensoranordnung, umfassend wenigstens einen ersten Sensor zur Detektion des Drehmoments des Motors und wenigstens einen zweiten Sensor zur Detektion der über die Messwelle und/oder den ersten Messkopf auf die Einzelprobe ausgeübten Normalkraft auf. Vorteilhaft werden durch die Messung des Drehmoments des Motors Daten zur (Scher-)Viskosität, Dehnviskosität und Schubspannung der Probe erfasst, da das Drehmoment direkt mit dem Widerstand der Probe gegenüber der Rotationsbewegung korreliert. Der beispielsweise an der Messwelle oder am Messkopf vorgesehene Sensor zur Detektion der Normalkraft erlaubt es, zusätzliche Informationen über die Belastung der Probe in vertikaler Richtung zu gewinnen, wodurch im Messablauf die Bestimmung viskoelastischer Eigenschaften sowie von Speichermodul und Verlustmodul erfolgt. Das erfindungsgemäße Rheometer ermöglicht somit die Erfassung von relativen und absoluten Messgrößen in sequenzieller - oder bei der Anordnung von mehreren Messeinheiten simultaner- Analyse einer Vielzahl von Proben. Der Probendurchsatz wird dadurch entscheidend erhöht und die Reproduzierbarkeit vergleichender Messung mehrerer identischer Proben gewährleistet.

Gemäß einer weiteren Ausführungsform weist die wenigstens eine Positioniereinrichtung einen Linear- und/oder einen Spindelantrieb auf. Linear- oder Spindeltriebe bzw. die kombinierte Verwendung dieser Antriebe, erlauben vorteilhaft eine exakte Steuerung und Erfassung der Weglänge und Positionierung der Messeinheit und der Auflagefläche bzw. des Probenträgers. Dies ist vorteilhaft für die präzise Wegemessung, da die Antriebe eine gleichmäßige Bewegung ermöglichen und damit die Genauigkeit der Positionierung im gesamten System verbessert wird. Insbesondere Spindelantriebe bieten eine hohe Reproduzierbarkeit, da die Positionierung unabhängig von Belastungseinflüssen stabil bleibt und daher die präzise Positionierung der jeweiligen Elemente zueinander gewährleistet wird. Die kontinuierliche und gleichmäßige Bewegung eines Spindelantriebs ermöglicht die zuverlässige Integration in Wegmesssysteme, wie zum Beispiel Linearpotentiometer sowie optische oder induktive Messsysteme. So lässt sich die präzise und kontinuierliche Erfassung der Verschiebeposition realisieren. Als die Erfindung nicht beschränkende Alternativantriebe kommen beispielsweise auch hydraulische Antriebe oder Piezomotoren einzeln oder in Kombination mit den genannten Spindel- und Linearantrieben in Frage.

Gemäß einer weiteren Ausführungsform des erfindungsgemäßen Rotations-Rheometers weist die Auflagefläche eine Aufnahme zur lagefixierten Anordnung des Probenträgers auf. Vorteilhaft wird hierdurch die Genauigkeit in der Vorpositionierung des Probenträgers erhöht. Die Aufnahme kann dabei auf der Auflagefläche, beispielsweise in Form von Positionierleisten oder -punkten vorgesehen werden. Selbstverständlich ist auch eine in die Auflagefläche eingesenkte Aufnahme möglich, in die der jeweilige Probenträger eingesetzt wird. Die Aufnahme kann flexibel an die Größe und Grundfläche des Probenträgers angepasst, beispielsweise in der Auflagefläche versetzt oder verschoben werden. Vorteilhaft wird durch die Aufnahme auch die Benutzerfreundlichkeit erhöht, da die lagefixierte Aufnahme eine schnelle und einfache Positionierung des Probenträgers ermöglicht. Dies reduziert die Bearbeitungszeiten bei der Bestückung des Rheometers, da Justierungen entfallen. Die klar definierte Positionierung des Probenträgers in der Aufnahme ist zudem vorteilhaft für automatisierte Messabläufe, da der Probenträger in einer standardisierten und fest vorgegebenen Position eingesetzt wird, die auch in einer Steuerung des Geräts hinterlegt und verschiedenen Probeträgern zugeordnet werden kann.

Gemäß einer weiteren Ausführungsform des erfindungsgemäßen Rotations-Rheometers weist der Probenträger eine Vielzahl von in einem definierten Raster angeordneten Probengefäßen für jeweils eine der Einzelproben auf. In diesem Zusammenhang sieht eine vorteilhafte Weiterbildung vor, dass der Probenträger als standardisierte Mikrotiterplatte mit zwischen 2 und 1536 Probegefäßen ausgebildet ist. Im Zusammenhang mit den Ausführungsformen der vorliegenden Erfindung kann der Probenträger auch als separater Halter oder als Aufnahme für Mikrotiterplatten ausgebildet sein. Insbesondere entspricht dabei die Größe oder Grundfläche des Halters im Wesentlichen der Größe oder Grundfläche der Mikrotiterplatte. Auf diese Weise wird die simultane Messung einer Vielzahl von Proben mit hoher Reproduzierbarkeit ermöglicht und der Probendurchsatz dadurch wesentlich erhöht. Die Probenvorbereitung, die aufgrund des Standardformats des Probenträgers und der dadurch gegebenen Kompatibilität mit gängigen Laborausstattungen und automatisierten Systemen, kann so auch automatisiert durchgeführt und wesentlich beschleunigt werden, mit entsprechenden Vorteilen für den Probendurchsatz. Die standardisierte Mikrotiterplatte kann zudem in der entsprechend abgestimmten Aufnahme in der Auflageplatte eingesetzt werden und das System somit schnell und in einfacher Art und Weise mit einer Vielzahl von Proben bestückt werden. Nach Abschluss der Analyse kann die Mikrotiterplatte verworfen oder gereinigt und wiederverwendet werden, wobei das System sofort wieder für die nächste Messung zur Verfügung steht. Die Anordnung der Probengefäße in einem definierten Raster ermöglicht auch eine präzise, automatisierte Ausrichtung der Messeinheit relativ zu den Proben. Da Mikrotiterplatten in Laboren weit verbreitet sind, können diese mit vorhandenen Handhabungssystemen genutzt werden, wodurch die Implementierung des Rotations-Rheometers in bestehende Arbeitsabläufe, beispielsweise beim Vorlegen der Einzelproben erleichtert wird. Ein weiterer Vorteil der Nutzung von Mikrotiterplatten liegt in der Flexibilität des Systems, das je nach Bedarf eine geringe oder sehr hohe Anzahl an Proben verarbeiten kann.

Gemäß einer Weiterbildung ist weist der Probenträger eine die Einzelproben oder den Probenträger identifizierende Codierung auf, wobei in der Messeinheit und/oder der Auflagefläche zudem eine Erfassungseinheit zum Auslesen der Codierung vorgesehen ist. Alternativ kann auch ein Handscanner vorgesehen werden, der vom Benutzer bei Bestückung des Geräts verwendet wird, um das Probengefäß zu identifizieren und das entsprechende Analyseprotokoll auszuwählen. Vorteilhaft ist die Codierung insbesondere bei Hochdurchsatzanalysen und zur Dokumentation der Messergebnisse. Durch die automatische oder optional manuelle Erfassung der Codierung wird jeder Probeträger und/oder jede Probe eindeutig identifiziert, wodurch eine Zuordnung der Messdaten zu den einzelnen Proben bzw. Probenzträger ermöglicht wird. Ein weiterer Vorteil der Codierung ist die verbesserte Dokumentation und Nachverfolgbarkeit der Messungen. Die automatische Erfassung der Probenidentität gewährleistet, dass die Ergebnisse sofort mit den entsprechenden Proben verknüpft werden, wodurch eine schnelle und fehlerfreie Datenerfassung und -dokumentation gewährleistet wird. Darüber hinaus erleichtert die Codierung die Integration des Rotations-Rheometers in automatisierte Laborsysteme und erlaubt eine nahtlose Datenerfassung für insbesondere Qualitätskontrollprozesse oder in Forschungsprojekten.

Gemäß einer weiteren Ausführungsform weist die Auflagefläche eine Temperiereinheit für den Probenträger und/oder die Probengefäße auf. Dies ist besonders vorteilhaft für die Reproduzierbarkeit und Standardisierung der Versuchsbedingungen. Die Möglichkeit, die Temperatur präzise einzustellen, ermöglicht die Durchführung von Messungen unter kontrollierten Bedingungen, und verbessert die Vergleichbarkeit der Ergebnisse zwischen verschiedenen Proben und Messungen. Insbesondere durch die Option, jedes einzelne Probengefäß separat und individuell zu temperieren, können spezifische Temperaturanforderungen für jede Probe berücksichtigt und die Proben insbesondere gegen Verdampfen geschützt werden. Auch können temperaturbedingte Reaktionen der Proben beim Kontakt mit Sauerstoff reduziert bzw. vermieden werden. Dies ist besonders vorteilhaft für Proben, die empfindlich auf Temperaturschwankungen reagieren, zu Verdampfen neigen oder bei denen bestimmte thermische Bedingungen (z. B. ein Temperaturgradient über den Probenträger oder die Analyse hinweg) für die Analyse entscheidend sind. Eine gezielte Temperierung trägt zudem zur Konservierung der Probe bei und verhindert unerwünschte Veränderungen, die durch Temperaturschwankungen verursacht werden könnten. Es stehen verschiedene Möglichkeiten zur Ausbildung der Temperiereinheit zur Verfügung. Hierzu zählen beispielsweise, und ohne die Erfindung hierauf zu beschränken, Peltierelemente, die eine präzise, schnell regelbare Kühl- und Heizfunktion zur Verfügung stellen und eine abgestimmte Temperaturkontrolle einzelner Probengefäße ermöglichen. Des Weiteren besteht die Möglichkeit eine Wasserkühlung oder -heizung in der Auflagefläche vorzusehen. Auch durch geregelte Warmluft- oder Kaltluftströme kann eine homogene Temperierung des Probenträgers erreicht werden, wobei auch hierbei ein schnelles Anpassen der Temperatur möglich ist. Die Temperierungsmöglichkeiten erhöhen vorteilhaft die Flexibilität und Genauigkeit des Rotations-Rheometers, da sie den Einfluss der Temperatur auf die rheologischen Eigenschaften der Probe präzise steuern und standardisierte thermische Bedingungen schaffen.

Gemäß einer Weiterbildung ist eine in oder an der Auflagefläche angeordnete oder der Auflagefläche zugeordnete Reinigungsstation für den Messkopf vorgesehen. Vorteilhaft kann der Messkopf mittels der Reinigungsstation nach jeder Messung oder bei Bedarf automatisch gereinigt werden, um insbesondere Probenkontaminationen zu vermeiden. Die Reinigungsstation stellt damit sicher, dass keine Rückstände der vorherigen Probe auf dem Messkopf verbleiben, wodurch Verunreinigungen der nachfolgenden Proben ausgeschlossen und konsistente Messbedingungen ohne Verfälschung der Messwerte gewährleistet werden.

Gemäß einer weiteren Ausführungsform sind die Messeinheit und die Auflagefläche in einem Gehäuse angeordnet. Dabei ist insbesondere eine Vibrationsdämpfung der Auflagefläche und/oder des Gehäuses vorgesehen. Vorteilhaft werden hierdurch gleichbleibende Umgebungsbedingungen wie Temperatur, Luftfeuchtigkeit und Gasatmosphäre (z. B. durch Inertgasfüllung des bevorzugt gasdicht abschließenden Gehäuses) geschaffen und die Präzision und Reproduzierbarkeit der Messungen erhöht. Die Kontrolle der Umgebungsparameter minimiert äußere Einflüsse auf die Proben, insbesondere auf Proben mit geringen Volumina und niedrigen Konzentrationen. Die konstante Temperatur im Gehäuse stellt sicher, dass thermische Schwankungen keinen Einfluss auf die rheologischen Eigenschaften der Probe haben. Dies bietet Vorteile für die Genauigkeit der Messung von Eigenschaften wie Viskosität, Speichermodul und Verlustmodul. Die Regulierung der Luftfeuchtigkeit verhindert das Austrocknen oder die Feuchtigkeitsaufnahme der Probe und verhindert entsprechende Verfälschungen der Messergebnisse. Die Möglichkeit, eine spezifische Gasatmosphäre zu schaffen, beispielsweise durch eine Inertgasfüllung, schützt empfindliche Proben vor Oxidation oder anderen unerwünschten chemischen Reaktionen mit Bestandteilen der Luft. Dies ist besonders relevant bei der Analyse von Proben, die auf Umgebungsbedingungen reagieren, wie z. B. bestimmte Proteine oder biomedizinische Materialien.

Die Vibrationsdämpfung der Auflagefläche und/oder des Gehäuses ermöglicht vorteilhaft eine störgrößenarme Messung, insbesondere von sehr kleinen Probenvolumina (beispielsweise im Bereich von 10 µl) und mit niedrigen Konzentrationen des relevanten Messmaterials (z. B. Proteinmengen von 1 bis 10 µg Protein pro µl Probenvolumen).

Gemäß einer weiteren Ausführungsform umfasst das erfindungsgemäße Rotations-Rheometer ferner eine Beleuchtungseinheit, wobei die Beleuchtungseinheit ausgewählt ist aus: einer UV-Licht-Beleuchtungseinheit, einer Beleuchtungseinheit, welche ausgelegt ist, sichtbares Licht zu emittieren, einer Beleuchtungseinheit, welche ausgelegt ist, infrarotes Licht zu emittieren, einer Beleuchtungseinheit, welche ausgelegt ist, polarisiertes Licht zu emittieren, einer Beleuchtungseinheit, welche ausgelegt ist, fluoreszierendes Licht, insbesondere blaues, grünes oder rotes fluoreszierendes Licht, zu emittieren. Vorteilhaft wird durch die Möglichkeit, unterschiedliche Arten von Licht - wie UV-Licht, sichtbares Licht, infrarotes Licht, polarisiertes Licht oder fluoreszierendes Licht - einzusetzen das Anwendungsspektrum des Geräts erheblich erweitert. Beispielhaft und die Erfindung nicht beschränkend, werden nachfolgend die Vorteile der verschiedenen Beleuchtungsarten erläutert. Mit einer UV-Licht-Beleuchtungseinheit können durch die Nutzung von UV-Licht in der Probe Photopolymerisations- oder Vernetzungsreaktionen initiiert und die Untersuchung der rheologischen Eigenschaften während solcher Reaktionen in Echtzeit durchgeführt werden. Eine Beleuchtungseinheit für sichtbares Licht ermöglicht die direkte Überwachung der Probe während der Messung, um Veränderungen wie Phasenübergänge, Sedimentation oder Aggregation zu erkennen. Dies kann auch in Kombination mit optischen Sensoren verwendet werden, um zusätzliche Daten zu erfassen. Eine Infrarot-Licht-Beleuchtungseinheit kann zur gezielten Erwärmung der Probe eingesetzt werden, um thermisch induzierte rheologische Veränderungen zu untersuchen und ermöglicht die Durchführung von Infrarotspektroskopie zur Bestimmung molekularer Strukturen und Bindungen während der rheologischen Messung. Eine Beleuchtungseinheit für polarisiertes Licht unterstützt die Analyse von Proben, die unterschiedliche Eigenschaften in verschiedenen Richtungen aufweisen, wie z. B. kristalline oder faserige Materialien und ermöglicht die Beobachtung von Phänomenen wie Doppelbrechung, die auf Änderungen in der molekularen Anordnung hinweisen kann. Eine Beleuchtungseinheit für fluoreszierendes Licht (blau, grün oder rot) ermöglicht die Anregung spezifischer Fluorophore in der Probe und erlaubt es dynamische Prozesse wie Diffusion, Konformationsänderungen oder Bindungsereignisse in Echtzeit zu verfolgen. Auch kann durch gezielte Markierung spezifischer Moleküle in der Probe eine gezielte Analyse bestimmter Komponenten innerhalb komplexer Proben durchgeführt werden.

Gemäß einer Weiterbildung ist in diesem Zusammenhang in oder an der Auflagefläche eine optische Auswertevorrichtung, insbesondere eine Kameravorrichtung, eine Mikroskopvorrichtung oder ein Fluoreszenzmikroskop zur optischen Auswertung der Einzelproben vorgesehen. Durch die Kopplung mit optischen Methoden wird vorteilhaft eine gleichzeitige Erfassung rheologischer und optischer Daten ermöglicht und der Informationsgehalt der Messungen erhöht. Die Kombination von rheologischen Messungen mit optischer Auswertung ermöglicht es, strukturelle Veränderungen in der Probe während der Scherung oder Deformation in Echtzeit zu beobachten. Dies verbessert das Verständnis der Zusammenhänge zwischen mikroskopischen Strukturen und makroskopischen rheologischen Eigenschaften. Mit Hilfe von Mikroskopie oder Fluoreszenzmikroskopie kann Phasentrennung, Aggregation, Gelbildung, Kristallisation oder Morphologieänderung in der Probe direkt beobachtet werden. Dies erweist sich insbesondere in der Materialforschung und bei komplexen Probenzusammensetzungen als vorteilhaft. Als weiterer Vorteil ist anzusehen, dass insbesondere in der biomedizinischen Forschung, der Pharmaentwicklung und der Polymerwissenschaft komplexe Prozesse wie Proteinaggregation, Zellreaktionen, Gewebe- oder Polymerausrichtung unter mechanischer Belastung untersucht werden können.

Gemäß einer Weiterbildung des Verfahrens wird die rheologische Analyse der Einzelproben anhand gleicher oder einzelprobenspezifischer Analyseparameter durchgeführt. Durch die Verwendung identischer Analyseparameter für alle Proben wird vorteilhaft sichergestellt, dass die Ergebnisse direkt miteinander vergleichbar sind. Dies ist besonders vorteilhaft für Untersuchungen, bei denen Abweichungen innerhalb einer Serie quantifiziert und ausgewertet werden sollen, wie z. B. in der Qualitätskontrolle oder bei Batch-Analysen. Einzelprobenspezifische Analyseparameter erlauben demgegenüber vorteilhaft die Anpassung der Messbedingungen an die individuellen Eigenschaften jeder Probe, z. B. an die Viskosität, Konzentration oder Temperaturanforderungen. Dies ist besonders vorteilhaft bei heterogenen Probenserien, wie beispielsweise in der biomedizinischen Forschung oder der Materialentwicklung. Für Proben mit besonderen Anforderungen, wie z. B. empfindlichen biologischen Proben oder hochviskosen Materialien, kann die Analyse durch spezifische Einstellungen (z. B. der Scherrate oder der Temperatur während der Messung) optimiert werden. Dadurch können die Messdaten genauer und besser auf die spezifischen Eigenschaften jeder Probe abgestimmt werden. Durch die Möglichkeit, einzelne Proben mit individuellen Analyseparametern zu messen, können beispielsweise Materialien mit unterschiedlichen rheologischen Verhaltenstypen in einem einzigen Durchgang analysiert werden.

Gemäß einer Weiterbildung des Verfahrens ist ferner vorgesehen, dass das Verfahren das Erfassen von optischen Analysedaten der Einzelproben während der rheologischen Analyse umfasst. Hieraus ergeben sich Vorteile bezüglich der umfassenden Charakterisierung der Proben, der Erweiterung des Informationsgehalts der Daten und der Echtzeitbeobachtung struktureller Veränderungen. Die simultane Erfassung optischer und rheologischer Daten ermöglicht vorteilhaft eine tiefere und vollständigere Analyse der Probe. Während die rheologischen Daten Auskunft über die mechanischen Eigenschaften (z. B. Viskosität, Elastizität) geben, liefern die optischen Daten Informationen über strukturelle Merkmale und Veränderungen in der Probe, wie Partikelgröße, Aggregation oder Phasenübergänge. Durch die optische Erfassung während der rheologischen Analyse können zudem dynamische Veränderungen innerhalb der Probe in Echtzeit überwacht werden. So lassen sich z. B. Phänomene wie die Bildung von Aggregaten, Gelierung, Phasentrennung oder die Ausrichtung von Partikeln unter Scherbelastung beobachten und die Beziehung zwischen Struktur und mechanischen Eigenschaften analysieren. Insgesamt ermöglicht die Weiterbildung des Verfahrens vorteilhaft eine integrierte und umfassende Analyse, die über die reine Erfassung rheologischer Eigenschaften hinausgeht und eine detaillierte und strukturelle Charakterisierung der Proben unterstützt.

Gemäß einer Weiterbildung des Verfahrens ist das Erfassen, Auswerten und optional graphische Darstellen der einzelprobenspezifischen Analysedaten in einer Auswerte- und Anzeigeeinheit vorgesehen. Vorteilhaft ermöglicht die Auswerte- und Anzeigeeinheit eine sofortige Visualisierung der Analysedaten für jede einzelne Probe. Die graphische Darstellung der Daten, z. B. in Form von Kurven oder Diagrammen, erleichtert es dem Benutzer, die Ergebnisse schnell zu interpretieren und Auffälligkeiten oder Trends in den Daten unmittelbar zu erkennen. Auch können durch die einheitliche Darstellung der Daten Proben unter identischen oder unterschiedlichen Analyseparametern direkt miteinander verglichen werden, um beispielsweise Schwankungen oder Muster innerhalb einer Probenserie zu identifizieren.

Gemäß einer weiteren Ausführungsform umfasst das Verfahren ferner das Auslesen der dem Probenträger und/oder dem jeweiligen Probengefäß zugeordneten Codierung und das Einstellen der Analyseparameter anhand der jeweiligen Codierung. Vorteilhaft können durch das automatische Auslesen der Codierung die für jede Probe spezifischen Analyseparameter ohne manuelle Eingriffe eingestellt werden. Die automatische Parameteranpassung spart Zeit, da die Analyseparameter für jede Probe ohne manuelle Eingriffe gesetzt werden. Dies ist besonders vorteilhaft bei einer großen Anzahl an Proben, da der Analyseprozess erheblich beschleunigt und der Probendurchsatz erhöht wird. Enthält die Codierung spezifische Parameter für jedes Probengefäß, können Proben mit unterschiedlichen Eigenschaften oder Anforderungen (z. B. Viskosität, Temperatur, Schergeschwindigkeit) im selben Messdurchgang durch probenabhängige Änderung der Analyseparameter analysiert werden. Vorteilhaft können so auch Probenserien mit vielfältigen Anforderungen und unterschiedlichen Messparametern in den einzelnen Proben effizient bearbeitet werden. Die direkte Übernahme der Mess- bzw. Analyseparameter aus der Codierung eliminiert die Gefahr von Eingabefehlern und ermöglicht eine vollständig automatisierte und fehlerfreie Anpassung der Analysebedingungen. Dies ist besonders bei komplexen oder variablen Protokollen vorteilhaft, da menschliche Fehler ausgeschlossen werden. Die Codierung ermöglicht auch die lückenlose Dokumentation der Analyseparameter für jede Probe. Die automatische Zuordnung und Einstellung der Parameter erleichtert die Nachverfolgbarkeit der Messungen und vereinfacht die Dokumentation. Die über die Codierung erreichbare Automatisierung macht das Verfahren kompatibel mit standardisierten und automatisierten Laborabläufen. Die Integration in bestehende Systeme und Prozesse wird erleichtert und die Effizienz und Skalierbarkeit des Verfahrens erhöht.

In einer Weiterbildung des erfindungsgemäßen Verfahrens ist vorgesehen, dass das Reinigen des Messkopfes in einer separaten, der Auflagefläche zugeordneten oder in der Auflagefläche angeordneten Reinigungsstation oder einem Reinigungsgefäß, durchgeführt wird und vor dem Reinigen ein fluchtendes Ausrichten von Messkopf und Reinigungsstation durch die Positioniereinrichtung erfolgt. Die separate Reinigungsstation erlaubt vorteilhaft eine gezielte und gründliche Reinigung des Messkopfes unter kontrollierten Bedingungen während des Verfahrens. Dies reduziert das Risiko, dass Probenrückstände auf dem Messkopf verbleiben und in die nachfolgenden Proben verschleppt werden. Das fluchtende Ausrichten des Messkopfes zur Reinigungsstation oder einem Reinigungsgefäß durch die Positioniereinrichtung automatisiert den Reinigungsprozess und spart Zeit, da kein manuelles Eingreifen erforderlich ist. Der gesamte Prozess kann in einen automatisierten Messablauf integriert werden, wodurch die Effizienz besonders bei der Analyse vieler Proben gesteigert wird. Die kontrollierte Reinigung in einem separaten Gefäß ermöglicht es, verschiedene Reinigungsmedien oder Reinigungsmethoden (z. B. Spülflüssigkeiten oder Ultraschall) zu verwenden, die an die jeweilige Probe angepasst werden können. Dies ist besonders vorteilhaft bei der Analyse von Proben mit stark variierenden Eigenschaften, wie z. B. viskosen oder leicht klebrigen Materialien.

In einer weiteren Ausführungsform des erfindungsgemäß Verfahrens ist vorgesehen, dass das Reinigen des Messkopfes in wenigstens einem im Probenträger vorgesehenen, insbesondere ein Reinigungsmedium enthaltenden Probengefäß, durchgeführt wird. Da das Reinigungsgefäß direkt im Probenträger integriert ist, entfällt vorteilhaft die Notwendigkeit, eine separate Reinigungsstation mit einem Reinigungsgefäß anzusteuern. Dies vereinfacht den Ablauf und ermöglicht eine schnellere und effizientere Durchführung der Reinigungszwischenschritte. Der Verzicht auf ein externes Reinigungsgefäß verringert vorteilhaft auch die Komplexität des Geräts und spart Platz. Dies ermöglicht eine kompaktere Bauweise und einen vereinfachten Aufbau des gesamten Systems. Die Verwendung eines im Probenträger befindlichen Reinigungsgefäßes erleichtert die Programmierung automatisierter Mess- und Reinigungsabläufe. Der Messkopf kann nach einer Analyse direkt zum Reinigungsgefäß geführt werden, wodurch ein schneller Wechsel zwischen Mess- und Reinigungszyklen möglich wird, ohne dass der Arbeitsablauf unterbrochen werden muss. Das im Probenträger befindliche Reinigungsgefäß kann je nach Bedarf mit unterschiedlichen Reinigungsmedien befüllt werden, und erlaubt so eine optimale Anpassung des Reinigungsprozesses an die jeweilige Probenserie. Besonders bei Proben mit stark variierenden Eigenschaften (z. B. viskose, klebrige oder feste Substanzen) ist diese Flexibilität vorteilhaft. Es besteht auch die Möglichkeit eine Zwischenschritt zur Trocknung des Messkopfes vorzusehen.

Gemäß einer Weiterbildung des erfindungsgemäßen Probenträgers ist der Probenträger als standardisierte Mikrotiterplatte mit zwischen 2 und 1536 Probegefäßen ausgebildet. Daneben kann der Probenträger auch als Halter oder Aufnahme für in den Probenträger einsetzbare Mikrotiterplatten im vorgenannten Format ausgebildet sein. Die Größe oder Grundfläche des Halters entspricht dabei im Wesentlichen der Größe oder Grundfläche der Mikrotiterplatte. Vorteilhaft ermöglicht die Mikrotiterplatte die Analyse einer großen Anzahl von Proben in einem einzigen Durchgang und erhöht damit den Probendurchsatz. Die standardisierte Bauweise der Mikrotiterplatte erlaubt zudem die Integration in automatisierte Laborsysteme und ist mit gängigen Handhabungs- und Analysegeräten kompatibel. Die durch standardisierte Mikrotiterplatten mögliche variable Anzahl an Probengefäßen ermöglicht die Anpassung an unterschiedliche Analyseanforderungen, von kleinen bis zu großen Probenserien.

Die obigen Ausführungsformen und Weiterbildungen lassen sich, sofern sinnvoll, beliebig miteinander kombinieren. Weitere mögliche Ausführungsformen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand von Ausführungsbeispielen unter Bezugnahme auf die beiliegenden Figuren der Zeichnungen näher erläutert. Von den Figuren zeigen:
- Fig. 1: eine schematische Darstellung eines Rotations-Rheometers gemäß eines Ausführungsbeispiels der Erfindung;
- Fig. 2: eine schematische Darstellung eines Probenträgers gemäß eines Ausführungsbeispiels der Erfindung in Draufsicht;
- Fig. 3: eine schematische Darstellung eines Probenträgers gemäß eines Ausführungsbeispiels der Erfindung in Seitenansicht;
- Fig. 4: eine schematische Darstellung eines einer Auflagefläche Probenträgers in einem Rotations-Rheometers gemäß eines Ausführungsbeispiels der Erfindung in Draufsicht;
- Fig. 5: eine schematische Darstellung eines Rotations-Rheometers gemäß eines weiteren Ausführungsbeispiels der Erfindung; und
- Fig. 6: ein Ablaufdiagramm eines Verfahrens zur sequenziellen Analyse von Einzelproben in einem Rotations-Rheometer gemäß eines Ausführungsbeispiels der vorliegenden Erfindung.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

Obwohl vorliegend spezifische Ausführungsformen und Weiterbildungen dargestellt und beschrieben sind, wird der Fachmann bevorzugen, dass eine Vielzahl von alternativen und/oder gleichartigen Ausführungen die dargestellten und beschriebenen spezifischen Ausführungsbeispiele ersetzen können, ohne vom Umfang der vorliegenden Erfindung abzukehren. Diese Anmeldung soll allgemein alle Abwandlungen oder Änderungen der hierin beschriebenen spezifischen Ausführungsbeispiele abdecken.

Die beiliegenden Figuren sollen ein weiteres Verständnis von Ausführungsformen der Erfindung vermitteln und dienen im Zusammenhang mit der Beschreibung der Erklärung von Prinzipien und Konzepten der Erfindung. Andere Ausführungsbeispiele und viele der genannten Vorteile ergeben sich im Hinblick auf die Zeichnungen. Die Zeichnungen sind lediglich als schematische Zeichnungen zu verstehen und die Elemente der Zeichnungen sind nicht notwendigerweise maßstabsgetreu zueinander dargestellt. Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

Gestrichelte Linien in den Figuren der Zeichnungen verdeutlichen, dass die Verbindungen zwischen den die gestrichelten Linien verbindenden Komponenten nicht zwingend physischen Kontakt miteinander haben müssen, sondern gleichermaßen drahtlos zueinander gekoppelt sein können.

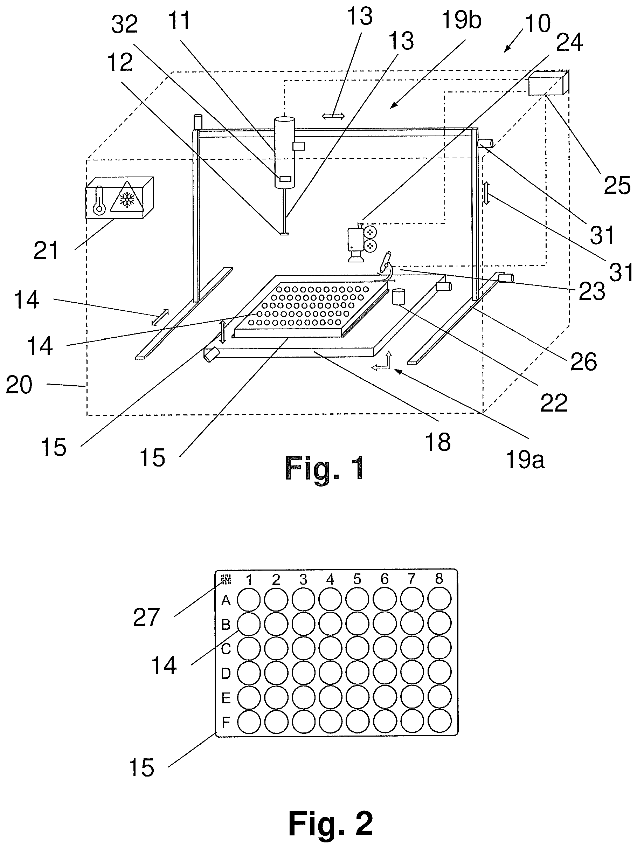

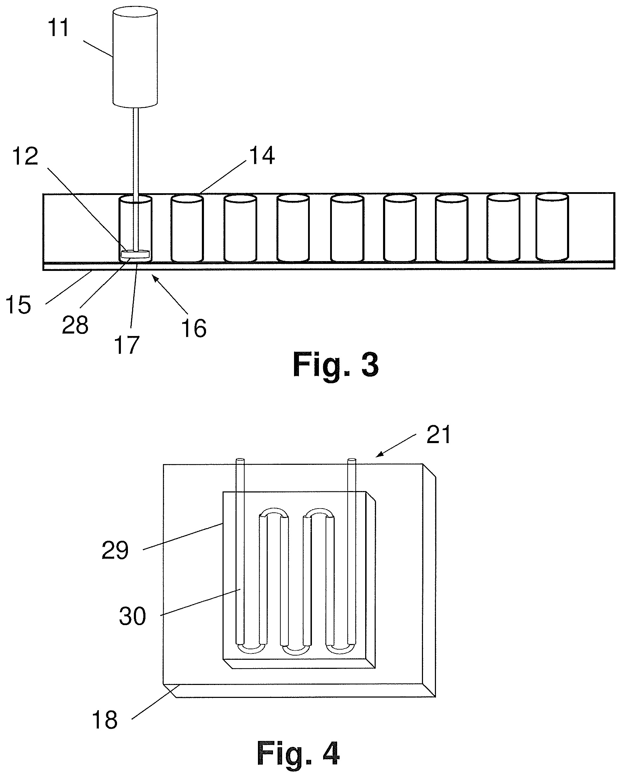

Fig. 1 zeigt eine schematische Darstellung eines Rotations-Rheometers 10 gemäß eines Ausführungsbeispiels der Erfindung. Das dargestellte Rotations-Rheometer 10 ist darauf ausgelegt, rheologische Analysen von Einzelproben sequenziell in einem Messdurchgang durchzuführen. Das System weist eine Messeinheit 11 mit einem Messkopf 12 auf, der an einer drehbaren Messwelle 13 angebracht ist und vertikal in Probengefäße 14 eines unterhalb der Messeinheit 11 angeordneten Probenträgers 15 abgesenkt werden kann, um einen definierten Messspalt 16 zwischen dem Gefäßboden 17 (vgl. Fig. 3) und dem Messkopf 12 zu bilden. Die Messeinheit 11 kann horizontal (Pfeil H1) entlang der Breite des Probenträgers 15 bewegt werden, um unterschiedliche Probengefäße 14 in einer Reihe anzusteuern. Dies erfolgt typischerweise durch präzise Linearführungen oder Linear- oder Spindelantriebe 31. Die horizontale Bewegbarkeit in der Tiefe des Probenträgers 15 (Pfeil T1) ermöglicht die Ansteuerung verschiedener Reihen von Probengefäßen 14. Diese Bewegung erfolgt durch zusätzliche Linear- oder Spindelantriebe 31. Die vertikale Bewegung (Pfeil V1) dient dazu, den Messkopf 12 in das jeweilige Probengefäß 14 abzusenken oder aus diesem anzuheben. Die z-Bewegung wird kann durch Spindelantriebe, Piezomotoren oder hydraulische Antriebe realisiert werden, die eine hohe Präzision gewährleisten. Die Auflagefläche 18, auf der der Probenträger 15 platziert ist, kann ebenfalls in der x- und y-Richtung (Pfeile H2, T2) verfahren werden, um das jeweilige Probengefäß 14 relativ zur Messeinheit 11 auszurichten. Optional kann die Auflageplatte in vertikaler Richtung (Pfeil V2) bewegt werden, beispielsweise zur Anpassung der Höhenposition des Probenträgers 15 relativ zur Messeinheit 11.

Die Messeinheit 11 umfasst zudem verschiedene in einer Sensoranordnung 32 zusammengefasste und über die Messeinheit 11 verteilt angeordnete Sensoren zur Messung von Drehmoment und Normalkraft, um rheologische Parameter wie Viskosität, Schubspannung und viskoelastische Eigenschaften zu bestimmen. Der Probenträger 15 ist auf einer Auflagefläche 18 angeordnet und umfasst mehrere Probengefäße 14, die in einem Raster ausgerichtet sind. Die der Auflagefläche 18 zugeordnete Positioniereinrichtung 19a ermöglicht eine Ausrichtung des Probenträgers 15 bzw. der einzelnen Probengefäße 14 relativ zum Messkopf 12. Sowohl die Auflagefläche 18 wie auch die Messeinheit 11 sind mit Positioniereinrichtungen 19a, b ausgestattet, die Bewegungen in x-, y- und z-Richtung erlauben, um die Ausrichtung und Positionierung der Messeinheit 11 und des Probenträgers 15 relativ zueinander vorzunehmen. Die Positioniereinrichtung 19b der Messeinheit 11 ist im Ausführungsbeispiel nach Art eines Portals ausgebildet und weist mehrere horizontal und vertikal ausgerichtete Fahrschienen 26 auf, entlang derer die Messeinheit 11 mittels Linear- oder Spindelantrieben 31 bewegt und relativ zum Probenträger 15 ausgerichtet wird. Optional kann die Positioniereinrichtung 19b der Messeinheit 11 auch für eine Verschwenkung oder Verkippung der Messeinheit 11 eingerichtet sein.

Sämtliche Elemente des Rotations-Rheometers 10 sind in einem bevorzugt gasdicht abschließenden Gehäuse 20 aufgenommen. Dieses weist eine schematisch dargestellte Temperiereinheit 21 auf, die die Umgebungsbedingungen (z.B. Temperatur, Luftfeuchtigkeit und/oder Gasatmosphäre) im Gehäuse 20 kontrolliert und einstellt.

Im Ausführungsbeispiel der Fig. 1 ist des Weiteren eine Reinigungsstation 22 für den Messkopf 12 in der Auflagefläche 18 integriert. Diese wird genutzt, um nach jeder Analyse Rückstände zu entfernen und Kreuzkontaminationen zu vermeiden. Die Reinigungsstation 22 kann optional auch stationär neben der Auflagefläche 18 oder separat im Gehäuse 20 positioniert sein.

Ergänzend zur rheologischen Messung kann eine optische Auswertung erfolgen, beispielsweise über eine Mikroskopvorrichtung 23 oder eine Kamera 24, die strukturelle Veränderungen der Probe während der Analyse dokumentiert.

Das Rotations-Rheometer 10 weist auch eine Auswerteeinheit 25 auf, die mit den einzelnen Elementen (Messeinheit 10, Mikroskopvorrichtung 23, Kamera 24) kabellos oder kabelgebunden verbunden ist, die dort ermittelten rheologischen und optischen Daten aufnimmt und für nachfolgende Auswertungen und/oder eine graphische Darstellung verarbeitet.

Fig. 2 zeigt eine schematische Darstellung eines Probenträgers 15 gemäß eines Ausführungsbeispiels der Erfindung in Draufsicht. Der dargestellte Probenträger 15 ist in Form einer Mikrotiterplatte mit in einem definierten Raster angeordneten Probengefäßen 14 ausgebildet. Im Ausführungsbeispiel umfasst der Probenträger sechs Reihen (A bis F) und acht Spalten (1 bis 8), wodurch insgesamt 48 Probengefäße 14 bereitgestellt werden, ohne die Erfindung jedoch hierauf zu beschränken. Jedes Probengefäß 14 ist für die Aufnahme einer Einzelprobe ausgelegt, sodass eine Vielzahl von Proben in einem einzigen Analysedurchgang bearbeitet werden kann. Der Probenträger 15 ist so ausgelegt, dass er auch mehr oder weniger Probengefäße 14 aufweisen kann, je nach Anforderung der jeweiligen Anwendung. Beispielsweise können Probenträger 15 mit zwischen 2 und 1536 Probengefäßen 14 verwendet werden, um den Probendurchsatz an die spezifischen Protokolle anzupassen. Der Probenträger 15 kann als standardisierte Mikrotiterplatte ausgeführt sein, um eine Kompatibilität mit automatisierten Labor- und Handhabungsgeräten und standardisierten Prozessen zu gewährleisten. Die standardisierte Rasteranordnung erleichtert dabei die Ausrichtung des Probenträgers 15 relativ zur Messeinheit 11 und ermöglicht eine automatisierte Bestückung, Positionierung und Analyse. Der Probenträger 15 kann zudem mit einer automatisch oder manuell (beispielsweise mit einem Handscanner) auslesbaren Codierung 27, beispielsweise einem QR-Code, versehen sein, die die eindeutige Identifizierung der Proben und die Zuordnung der jeweiligen Messparameter und deren Dokumentation ermöglicht.

Fig. 3 zeigt eine schematische Darstellung eines Probenträgers 15 gemäß eines Ausführungsbeispiels der Erfindung in Seitenansicht. Fig. 3 stellt den Probenträger 15 mit mehreren Probengefäßen 14 dar, die in einer linearen Anordnung gehalten sind. Ein Messkopf 12, der Teil der Messeinheit 11 ist, ist in eines der Probengefäße 14 eingesenkt, um die rheologische Messung durchzuführen. Der Messkopf 12 kann, neben der hier dargestellten plattenförmigen Ausgestaltung, weitere geometrische und im Zusammenhang mit rheologischen Messverfahren bekannte Konfigurationen aufweisen und austauschbar mit der Messeinheit 11 verbunden werden. Der Messkopf 12 bildet einen definierten Messspalt 16 zwischen seiner Unterseite 28 und dem Gefäßboden 17 des Probengefäßes 14, um Messungen rheologischer Parameter durchzuführen. Die rheologischen Messungen umfassen typische Größen wie Viskosität, Schubspannung, viskoelastische Eigenschaften, Speichermodul und Verlustmodul. Die Messungen und Analyseparameter können im erfindungsgemäßen Rotations-Rheometer 10 individuell für jede Einzelprobe angepasst werden, um z. B. Materialverhalten unter unterschiedlichen Scherbedingungen, Temperaturen oder anderen äußeren Faktoren zu charakterisieren. Jede Probe kann somit unter spezifischen oder standardisierten Bedingungen analysiert werden, um sowohl vergleichbare Ergebnisse als auch eine detaillierte Charakterisierung einzelner Proben zu ermöglichen. Die schematische Darstellung zeigt weiterhin, dass der Probenträger 15 so ausgelegt ist, dass mehrere Proben nacheinander analysiert werden können, wobei der Messkopf 12 automatisiert von einem Probengefäß 14 zum nächsten bewegt wird. Dies gewährleistet einen hohen Probendurchsatz und reduziert manuelle Eingriffe während des Analyseprozesses.

Fig. 4 zeigt eine schematische Darstellung einer Auflagefläche 18 für einen Probenträger 15 in einem Rotations-Rheometer 10 gemäß eines Ausführungsbeispiels der Erfindung in Draufsicht. Die Auflagefläche 18 ist mit einer Temperiereinheit 21 ausgestattet, die im Ausführungsbeispiel als Durchflusskühler/-Heizer mit die Auflagefläche bzw. eine Aufnahme 29 für den Probenträger 15 durchlaufenden Leitungen 30 für ein Kühl-/Heizmedium ausgeführt ist. Die Temperiereinheit 21 dient dazu, die Temperaturbedingungen während der rheologischen Analyse genau einzustellen und aufrechtzuerhalten, wodurch eine standardisierte und reproduzierbare Messumgebung geschaffen wird. Dies ist insbesondere bei empfindlichen Proben oder bei der Untersuchung temperaturempfindlicher Eigenschaften von Materialien vorteilhaft. Alternativ kann die Temperiereinheit 21 zur Temperatursteuerung alternativ oder zusätzlich Peltierelemente oder Warmluft- oder Kaltluftstromleitungen aufweisen. Die Temperiereinheit 21 kann auch für die individuelle Temperierung einzelner Probengefäße 14 eingerichtet sein und ermöglicht die Einstellung spezifischer Temperaturen oder Temperaturprofile bzw. -gradienten für einzelne Proben, z. B. durch integrierte Miniatur-Heiz- oder Kühlsysteme in der Auflagefläche.

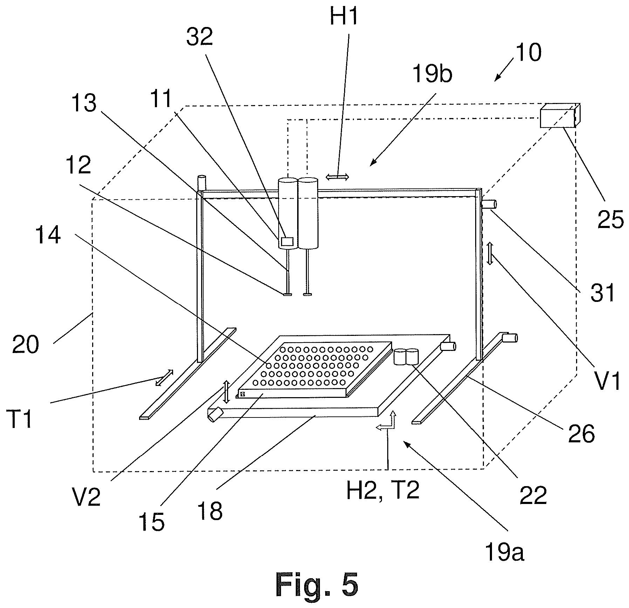

Fig. 5 zeigt eine schematische Darstellung eines Rotations-Rheometers 10 gemäß eines weiteren Ausführungsbeispiels der Erfindung, ähnlich dem Rotations-Rheometer 10 wie in Fig. 1 dargestellt. Gleiche Elemente werden daher nicht erneut beschrieben. Im Unterschied zum Rotations-Rheometer 10 aus Fig. 1 sind im Ausführungsbeispiel der Fig. 5 zwei Messeinheiten 11 vorgesehen, die eine simultane Messung von Proben in unterschiedlichen Probengefäßen 14 ermöglichen. Jede Messeinheit 11 ist unabhängig positionierbar, wobei vor der simultanen Messung eine präzise Ansteuerung der jeweiligen Probengefäße 14 für beide Messeinheiten erfolgt. Wie in der Ausführungsform gemäß Fig. 1 können die Messeinheiten 11 horizontal (Pfeil H1) entlang der Breite des Probenträgers 15 bewegt werden, um unterschiedliche Probengefäße 14 in einer Reihe anzusteuern. Dies erfolgt typischerweise durch präzise Linearführungen oder Linear- oder Spindelantriebe 31. Die horizontale Bewegbarkeit in der Tiefe des Probenträgers 15 (Pfeil T1) ermöglicht die Ansteuerung verschiedener Reihen von Probengefäßen 14. Diese Bewegung erfolgt durch zusätzliche Linear- oder Spindelantriebe 31. Die vertikale Bewegung (Pfeil V1) dient dazu, die Messköpfe 12 in die Probengefäße 14 abzusenken oder aus diesen anzuheben. Die z-Bewegung kann durch Spindelantriebe, Piezomotoren oder hydraulische Antriebe realisiert werden, die eine hohe Präzision gewährleisten. Die Auflagefläche 18, auf der der Probenträger 15 platziert ist, kann ebenfalls in der x- und y-Richtung (Pfeile H2, T2) verfahren werden, um die Probengefäße 14 relativ zu den Messeinheiten 11 auszurichten. Optional kann die Auflageplatte in vertikaler Richtung (Pfeil V2) bewegt werden, beispielsweise zur Anpassung der Höhenposition des Probenträgers 15 relativ zu den Messeinheiten 11. Neben den in den Fig. 1 und 5 dargestellten stationären Ausführungsformen ist auch ein portabler Aufbau, zum Beispiel mit Druckgasflaschen zur Versorgung eines entsprechend gasdruckbeaufschlagten Luftlagers der Messeinheit 11 und Photovoltaikzellen zur Stromversorgung möglich, wobei sich das erfindungsgemäße Rotations-Rheometer dann auch für die Verwendung in Gebieten oder Umgebungen ohne ausreichende Infrastruktur eignet.

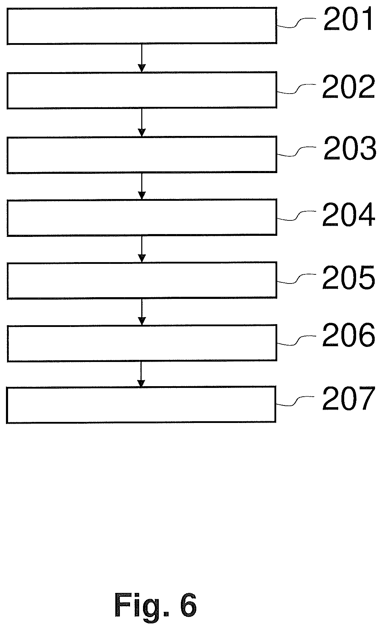

Fig. 6 zeigt ein Ablaufdiagramm eines Verfahrens zur sequenziellen Analyse von Einzelproben in einem Rotations-Rheometer 10 gemäß eines Ausführungsbeispiels der vorliegenden Erfindung. In einem ersten Verfahrensschritt 201 werden Einzelproben in den Probengefäßen 14 eines Probenträgers 15 automatisiert oder manuell vorgelegt. Im nächsten Schritt 202 erfolgt das Anordnen des mehrere Probengefäße 14 umfassenden Probeträgers 15 mit den in den Probengefäßen 14 vorgelegten Einzelproben auf oder in einer Auflagefläche 18 des Rotations-Rheometer 10. Mit Beginn des Messvorganges werden in Schritt 203 der Messkopfes 12 der Messeinheit 11 und eine erstes Probengefäß 14 relativ zueinander fluchtend ausgerichtet. Dies geschieht durch Bewegung der Messeinheit 11 und/oder der Auflagefläche 18 über die beiden Elementen zugeordneten Antriebe. Im einem dem Ausrichten nachfolgenden Schritt 204 wird der Messkopfes 12 in das Probengefäße 14 eingesenkt. Die Einsenktiefe ist im Analyseprotokoll in Abstimmung mit der Geometrie des Probengefäßes 14 derart definiert, dass der Messkopf 12 so weit abgesenkt wird, dass sich ein Messspalt 16 zwischen dem Messkopf 12 und einem Gefäßboden 17 des Probengefäßes 14 ausbildet. Nach Abschluss der Messvorbereitungen wird im Schritt 205 eine rheologische Analyse im jeweiligen Probengefäß 14 durchgeführt und rheologische Analysedaten jeder Einzelprobe durch Sensoren einer der Messeinheit 11 zugeordneten Sensoranordnung 32 erfasst. Im Schritt 206 wird der Messkopfes 12 nach Abschluss der Analyse aus dem Probengefäß 14 ausgehoben. In einem weiteren Schritt 207 wird der Messkopf 12 in einer ansteuerbaren Reinigungsstation 22 oder durch Einsenken in ein mit einer Reinigungsflüssigkeit gefülltes Probengefäß 14 des Probenträgers 15 gereinigt und für die nächste Analyse vorbereitet. In letzterem Fall ist nur die Hälfte der Probengefäße 14 mit Proben bestückt und die übrigen Probengefäße 14 enthalten die jeweilige, ggfs. probenspezifische Reinigungsflüssigkeit. Optional kann ein Trocknungsschritt nachgeschaltet werden. Die vorgenannten Schritte werden wiederholt, bis das Messprotokoll abgearbeitet ist und alle Proben im Probenträger 15 analysiert wurden.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

### Bezugszeichenliste

- 10: Rotations-Rheometers
- 11: Messeinheit
- 12: Messkopf
- 13: Messwelle
- 14: Probengefäß
- 15: Probenträger
- 16: Messspalt
- 17: Gefäßboden
- 18: Auflagefläche
- 19a, b: Positioniereinrichtung
- 20: Gehäuse
- 21: Temperiereinheit
- 22: Reinigungsstation
- 23: Mikroskopvorrichtung
- 24: Kamera
- 25: Auswerteeinheit
- 26: Fahrschienen
- 27: Codierung
- 28: Unterseite
- 29: Aufnahme
- 30: Leitungen
- 31: Linear- oder Spindelantriebe
- 32: Sensoranordnung
- H1, 2: Pfeil
- T1, 2: Pfeil
- V1, 2: Pfeil
- 201: Schritt
- 202: Schritt
- 203: Schritt
- 204: Schritt
- 205: Schritt
- 206: Schritt
- 207: Schritt

## Patentansprüche

1. Rotations-Rheometer (10) zur sequenziellen Analyse von Einzelproben in Probegefäßen (14) wenigstens eines, jeweils mehrere Probengefäße (14) aufweisenden Probenträgers (15), umfassend:
- wenigstens eine Messeinheit (11) mit einem an einer drehbaren Messwelle (13) anordenbaren und zur Ausbildung eines Messspaltes (16) im Bereich eines Gefäßbodens (17) des Probengefäßes (14) in das jeweilige Probengefäß (14) einsenkbaren Messkopf (12); und
- eine relativ zu der Messeinheit (11) beabstandete Auflagefläche (18) für den Probenträger (15),
wobei wenigstens eine Positioniereinrichtung (19a, b) zur fluchtenden Ausrichtung des Messkopfes (12) und des jeweiligen Probengefäßes (14) vor der Analyse der Einzelprobe vorgesehen ist.

2. Rotations-Rheometer (10) nach Anspruch 1, wobei wenigstens eine Positioniereinrichtung (19a, b) in der Auflagefläche (18) vorgesehen ist, wobei die Positioniereinrichtung (19a, b) zur Positionierung des Probenträgers (15) in horizontaler und vertikaler Richtung relativ zum Messkopf (12) eingerichtet ist.

3. Rotations-Rheometer (10) nach Anspruch 1 oder 2, wobei wenigstens eine der Messeinheit (11) zugeordnete Positioniereinrichtung (19b) für eine Positionierung des Messkopfes (12) wenigstens in horizontaler und vertikaler Richtung relativ zum Probenträger (15) vorgesehen ist.

4. Rotations-Rheometer (10), nach einem der vorhergehenden Ansprüche, wobei die Messeinheit (11) eine Sensoranordnung (32), umfassend wenigstens einen ersten Sensor zur Detektion des Drehmoments des Motors und wenigstens einen zweiten Sensor zur Detektion der über die Messwelle (13) und/oder den ersten Messkopf (11) auf die Einzelprobe ausgeübten Normalkraft, aufweist.

5. Rotations-Rheometer (10) nach einem der vorhergehenden Ansprüche, wobei die wenigstens eine Positioniereinrichtung (19a, b) einen Linear- und/oder einen Spindelantrieb (31) aufweist.

6. Rotations-Rheometer (10) nach einem der vorhergehenden Ansprüche, wobei die Auflagefläche (18) eine Aufnahme (29) zur lagefixierten Anordnung des Probenträgers (15) aufweist.

7. Rotations-Rheometer (10) nach einem der vorhergehenden Ansprüche, wobei der Probenträger (10) eine Vielzahl von in einem definierten Raster angeordneten Probengefäßen (14) für jeweils eine der Einzelproben aufweist.

8. Rotations-Rheometer (10) nach Anspruch 7, wobei der Probenträger (15) als standardisierte Mikrotiterplatte mit zwischen 2 und 1536 Probegefäßen (14) oder Halter für eine standardisierte Mikrotiterplatte mit zwischen 2 und 1536 Probegefäßen ausgebildet ist.

9. Rotations-Rheometer (10) nach einem der vorhergehenden Ansprüche, wobei der Probenträger (15) eine den Probenträger (15) und/oder die Einzelproben identifizierende Codierung (27) aufweist und in der Messeinheit (11) und/oder der Auflagefläche (18) eine Erfassungseinheit zum Auslesen der Codierung (27) vorgesehen ist.

10. Rotations-Rheometer (10), nach einem der vorhergehenden Ansprüche wobei die Auflagefläche (18) eine Temperiereinheit (21) für den Probenträger (15) und/oder die Probengefäße (14) aufweist.

11. Rotations-Rheometer (10) nach einem der vorhergehenden Ansprüche, wobei eine in oder an der Auflagefläche (18) angeordnete oder der Auflagefläche (18) zugeordnete Reinigungsstation (22) für den Messkopf (12) vorgesehen ist.

12. Rotations-Rheometer (10) nach einem der vorhergehenden Ansprüche, wobei die Messeinheit (11) und die Auflagefläche (18) in einem Gehäuse (20) angeordnet sind und insbesondere eine Vibrationsdämpfung der Auflagefläche (18) und/oder des Gehäuses (20) vorgesehen ist.

13. Rotations-Rheometer (10) nach einem der vorhergehenden Ansprüche, ferner umfassend eine Beleuchtungseinheit, wobei die Beleuchtungseinheit ausgewählt ist aus: einer UV-Licht-Beleuchtungseinheit, einer Beleuchtungseinheit, welche ausgelegt ist, sichtbares Licht zu emittieren, einer Beleuchtungseinheit, welche ausgelegt ist, infrarotes Licht zu emittieren, einer Beleuchtungseinheit, welche ausgelegt ist, polarisiertes Licht zu emittieren, einer Beleuchtungseinheit, welche ausgelegt ist, fluoreszierendes Licht, insbesondere blaues, grünes oder rotes fluoreszierendes Licht, zu emittieren.

14. Rotations-Rheometer (10) nach einem der vorhergehenden Ansprüche, wobei in oder an der Auflagefläche (18) eine optische Erfassungsvorrichtung, insbesondere eine Kamera (24), eine Mikroskopvorrichtung (23) oder ein Fluoreszenzmikroskop zur optischen Erfassung der Einzelproben vorgesehen ist.

15. Verfahren zur sequenziellen Analyse von Einzelproben in einem Rotations-Rheometer (10), insbesondere in einem Rotations-Rheometer (10) nach einem der Ansprüche 1 bis 14 umfassend:
- Anordnen eines mehrere Probengefäße (14) mit in den Probengefäßen (14) vorgelegten Einzelproben aufweisenden Probenträgers (15) auf oder in einer Auflagefläche (18);
- Fluchtendes Ausrichten des Messkopfes (12) der Messeinheit (11) des Rotations-Rheometers (10) relativ zu einem ersten der jeweiligen Probengefäße (14) durch die Positioniereinrichtung (19a, b);
- Einsenken des Messkopfes (12) in das Probengefäß (14) zur Ausbildung eines Messspaltes (16) zwischen dem Messkopf (12) und einem Gefäßboden (17) des Probengefäßes (14);
- Durchführen der rheologischen Analyse im jeweiligen Probengefäß (14) und Erfassung von rheologischen Analysedaten jeder Einzelprobe durch die Sensoranordnung (32);
- Ausheben des Messkopfes (12) aus dem Probengefäß (14) nach Abschluss der Analyse;
- Reinigen oder Austauschen des Messkopfes (12) oder von die Probe kontaktierenden Elementen des Messkopfes (12); und
- Wiederholung der vorhergehenden Schritte bis zum Abschluss der Analyse aller Einzelproben des Probenträgers (15).

16. Verfahren nach Anspruch 15, wobei die rheologische Analyse der Einzelproben anhand gleicher oder einzelprobenspezifischer Analyseparameter durchgeführt wird.

17. Verfahren nach einem der Ansprüche 15 oder 16, ferner umfassend: Erfassen von optischen Analysedaten der Einzelproben während der rheologischen Analyse.

18. Verfahren nach Anspruch 15 bis 17, ferner umfassend: Erfassen, Auswerten und optional graphisches Darstellen der einzelprobenspezifischen Analysedaten in einer Auswerte- und Anzeigeeinheit (25).

19. Verfahren nach Anspruch 15 bis 18, ferner umfassend: Auslesen der dem Probenträger (15) und/oder dem jeweiligen Probengefäß (14) zugeordneten Codierung (27) und Einstellen der Analyseparameter anhand der jeweiligen Codierung (27).

20. Verfahren nach einem der Ansprüche 15 bis 19, wobei das Reinigen des Messkopfes (12) in einer separaten, der Auflagefläche (18) zugeordneten oder in der Auflagefläche (18) angeordneten Reinigungsstation (22) durchgeführt wird und vor dem Reinigen ein fluchtendes Ausrichten von Messkopf (12) und Reinigungsstation (22) durch die Positioniereinrichtung (19a, b) erfolgt.

21. Verfahren nach einem der Ansprüche 15 bis 19, wobei das Reinigen des Messkopfes (12) in wenigstens einem im Probenträger (15) vorgesehenen, insbesondere ein Reinigungsmedium enthaltenden Probengefäß (14) durchgeführt wird.

22. Probenträger (15), insbesondere zur Verwendung in einem Rotations-Rheometer (10) nach einem der Ansprüche 1 bis 14, wobei der Probenträger (15) eine Vielzahl von in einem definierten Raster angeordneten Probengefäßen (14) für jeweils eine Einzelprobe aufweist.

23. Probenträger (10) nach Anspruch 22, wobei der Probenträger (15) als standardisierte Mikrotiterplatte mit zwischen 2 und 1536 Probegefäßen (14) oder als Halter für eine standardisierte Mikrotiterplatte mit zwischen 2 und 1536 Probegefäßen ausgebildet ist.

24. Verwendung eines Probenträgers (15) nach einem der Ansprüche 22 oder 23 zur sequenziellen rheologischen Analyse von Einzelproben in einem Rotations-Rheometer (10), insbesondere in einem Rotations-Rheometer (10) nach einem der Ansprüche 1 bis 14.
